# FASCICULE DE BREVET EUROPEEN

(11) **EP 2 436 561 B1**
(45) Date de publication et mention de la délivrance du brevet: **19.09.2012**
(21) Numéro de dépôt: 11182072.6
(22) Date de dépôt: 20.09.2011
(51) Int. Cl.: B60R 5/04, B60R 7/02

(54) **Système d'organisation de l'espace et/ou de maintien d'au moins un objet dans un coffre de véhicule automobile, à plateforme mobile**
Raumaufteilungs- und Halterungssystem für mindestens einen Gegenstand im Kofferraum eines Kraftfahrzeugs mit beweglichem Boden
System for organising space and/or supporting at least one object in an automobile luggage compartment, with a mobile platform

(30) Priorité: 04.10.2010 FR 1058027
(43) Date de publication de la demande: 04.04.2012
(73) Titulaire: Advanced Comfort Systems France SAS - ACS France, 79302 Bressuire Cedex (FR)
(72) Inventeur: Cordillet, Mikaël, 28300 JOUY (FR); Chemineau, Nicolas, 85310 CHAILLE SOUS LES ORMEAUX (FR)
(74) Mandataire: Bioret, Ludovic

(56) Documents cités:
- EP-A1- 1 736 364
- EP-A1- 1 736 365
- GB-A- 2 423 065

## Description

Le domaine de l'invention est celui de l'automobile, et plus précisément celui du stockage et du maintien d'objets transportés dans un véhicule, et notamment dans son coffre (domaine connu sous le terme anglais de « cargo management »).

La sécurité, ainsi que, bien sûr, la nécessité de protéger l'intégrité des colis ou autres objets à transporter, exige la présence de moyens pour éviter les déplacements intempestifs des objets à l'intérieur du véhicule, ainsi que des chocs entre ces objets et/ou contre une paroi intérieure du véhicule, en particulier en cas de freinage brusque, de coup de volant, ou de choc dû à l'état de la chaussée ou à un accident.

Le domaine du « cargo management » a donc fait, ces dernières années, l'objet de nombreuses recherches et propositions pour optimiser et organiser l'espace de stockage et/ou de rangement d'un coffre de véhicule, et pour maintenir de façon efficace des objets dans ce coffre, et éviter qu'ils se renversent, glissent et/ou soient projetés.

Il est ainsi connu de disposer des rails sur le plancher et/ou les parois du coffre, dans lesquels peuvent être insérés et déplacés divers éléments, tels que des supports de délimitation de zone dans le coffre, ou des anneaux permettant le passage et la solidarisation de sangles ou de tendeurs.

Ces différents moyens s'avèrent efficaces, dans de nombreuses situations. Cependant, ils nécessitent des réglages et des adaptations spécifiques, pour chaque situation particulière (mise en place et blocage le long d'un des rails, puis déploiement et fixation d'une sangle, par exemple).

Par ailleurs, ces éléments doivent être démontables, pour permettre le transport de grosses charges ou d'objets volumineux, et doivent alors être stockés, ce qui nécessite de prévoir un emplacement spécifique, ou un stockage en dehors du véhicule.
Le document EP 1 736 364 A décrit un système d'organisation selon le préambule de la revendication 1.

Il existe donc un besoin de moyens permettant une organisation adaptée de l'espace du coffre, et le maintien d'objets dans celui-ci, qui soient simples et intuitifs à manipuler, et qu'il ne soit pas nécessaire de démonter dans certaines situations.

L'invention a notamment pour objectif de fournir une technique répondant à ce besoin et palliant au moins certains des inconvénients de l'art antérieur.

Plus précisément, un objectif de l'invention est de fournir des moyens permettant de séparer un coffre de véhicule en deux parties, le cas échéant de formes et de volumes adaptés, de façon simple et intuitive.

Un autre objectif de l'invention est de fournir une telle technique, qui ne nécessite pas le démontage l'élément particulier, pour disposer de tout l'espace du coffre.

Encore un autre objectif de l'invention est, au moins selon certains modes de réalisation, de fournir une telle technique, qui permette de faciliter le transport, la mise en place et le retrait d'objets lourds et/ou volumineux.

Ces objectifs, ainsi que d'autres qui apparaîtront par la suite sont atteints selon l'invention à l'aide d'un système d'organisation de l'espace et/ou de maintien d'au moins un objet dans un coffre de véhicule automobile, présentant un plancher et un fond, et portant deux rails de coffre. Un tel système comprend au moins une plaque de retenue dont deux coins inférieurs sont solidaires de patins mobiles en coulissement dans lesdits rails, chaque plaque pouvant être déplacée le long desdits rails entre une position de rangement, dans laquelle elle est plaquée contre le fond dudit coffre, et au moins une position de séparation et/ou de retenue, dans laquelle elle s'étend sensiblement parallèle audit fond.

Ainsi, il est aisé de définir deux espaces distincts dans le coffre (dont les dimensions sont adaptables, par simple coulissement le long des rails), tout en bénéficiant si besoin de l'espace total, lorsque la plaque est dans la position de rangement (sans qu'il soit nécessaire de démonter des éléments de cloisonnement et de les ranger à l'extérieur du véhicule).

Selon l'invention, ladite plaque est également mobile en rotation, de façon à pouvoir être inclinée par rapport à ladite position de repos, au moins un desdits patins portant des premiers éléments d'engrenage, complémentaires de seconds éléments d'engrenage solidaires de ladite plaque, lesdits premiers et seconds éléments d'engrenage pouvant prendre :
- une position engrenée, dans laquelle ladite plaque est immobilisée en rotation ; et
- une position non engrenée, dans laquelle ladite plaque peut être déplacée en rotation autour d'un axe s'étendant au voisinage dudit plancher.

Ainsi, il est possible de régler la position en inclinaison de la plaque, en fonction des besoins et des utilisations.

De façon préférentielle, selon ce mode de réalisation, le système comprend des moyens de rappel, tendant à ramener lesdits éléments d'engrenage dans la position engrenée.

Ladite plaque peut porter :
- une première poignée de déverrouillage, agissant sur au moins un premier câble de commande de façon à déplacer lesdits seconds éléments d'engrenage pour qu'ils passent dans ladite position non engrenée ; et/ou
- une seconde poignée de déverrouillage, agissant sur au moins un second câble de commande de façon à déplacer pour lesdits rouleaux pour qu'ils passent dans une position déverrouillée, permettant un déplacement en coulissement.

Dans un mode de réalisation particulier, le système comprend une poignée unique, regroupant ladite première poignée et ladite seconde poignée.

Selon un mode de mise en oeuvre particulier, lesdits patins portent deux rouleaux de verrouillage, assurant un blocage en coulissement par frottement contre le rail correspondant, dans une position de verrouillage. Ce blocage peut notamment être contrôlé par le premier câble.

Il est possible de définir, selon les mises en oeuvre, des positions d'inclinaison intermédiaire, adaptées pour recevoir et maintenir des objets de forme particulière.

En outre, dans certains modes de réalisation, la plaque peut prendre une position parallèle audit plancher, servant alors de support à un ou plusieurs objets.

Dans ce cas, avantageusement, ladite plaque peut être déplacée en coulissement, de façon à sortir au moins partiellement dudit coffre, et à permettre un chargement ou un déchargement plus aisé, notamment pour les objets lourds et/ou encombrants.

L'invention concerne également un véhicule automobile dont le coffre comprend un système d'organisation de l'espace et/ou de maintien d'au moins un objet tel que décrit ci-dessus.

D'autres caractéristiques et avantages de l'invention apparaîtront à la lecture de la description suivante d'un mode de réalisation préférentiel, donné à titre de simple exemple illustratif et non-limitatif, et des dessins annexés, parmi lesquels :
- les figures 1A à 1E illustrent diverses positions d'une tablette selon un mode de réalisation de l'invention ;
- la figure 2 est un exemple de rail pouvant être monté dans le coffre du véhicule, et permettant le déplacement de la tablette ;
- la figure 3 est une vue en coupe du rail de la figure 2, équipé d'un dispositif de blocage à rouleaux ;
- la figure 4 présente, schématiquement, une tablette selon l'invention, équipée de moyens de verrouillage de l'inclinaison et du coulissement ;
- la figure 5 est une vue partielle en coupe des moyens de verrouillage en inclinaison.

L'invention concerne donc une nouvelle approche du « cargo management », c'est-à-dire de l'organisation de l'espace dans un coffre de véhicule, et du maintien d'objets dans un tel coffre. En effet, au lieu de prévoir des systèmes à base de sangles ou d'éléments rigides devant être déployés dans le coffre par l'utilisateur en fonction de ses besoins, on prévoit une plaque, ou tablette, ou plateforme, unique, s'étendant sur toute la largeur du coffre et sur une partie substantielle de sa hauteur (par exemple 30 à 50 cm).

Dans une version simplifiée, cette tablette s'étend selon un plan vertical, ou sensiblement vertical (par exemple parallèle au fond du coffre, généralement défini par les sièges arrière du véhicule). Selon une variante, cette tablette est également mobile en rotation, pour pouvoir une position sensiblement horizontale (parallèle au plancher du coffre), et, selon les modes de réalisation, un ou plusieurs positions inclinées intermédiaires.

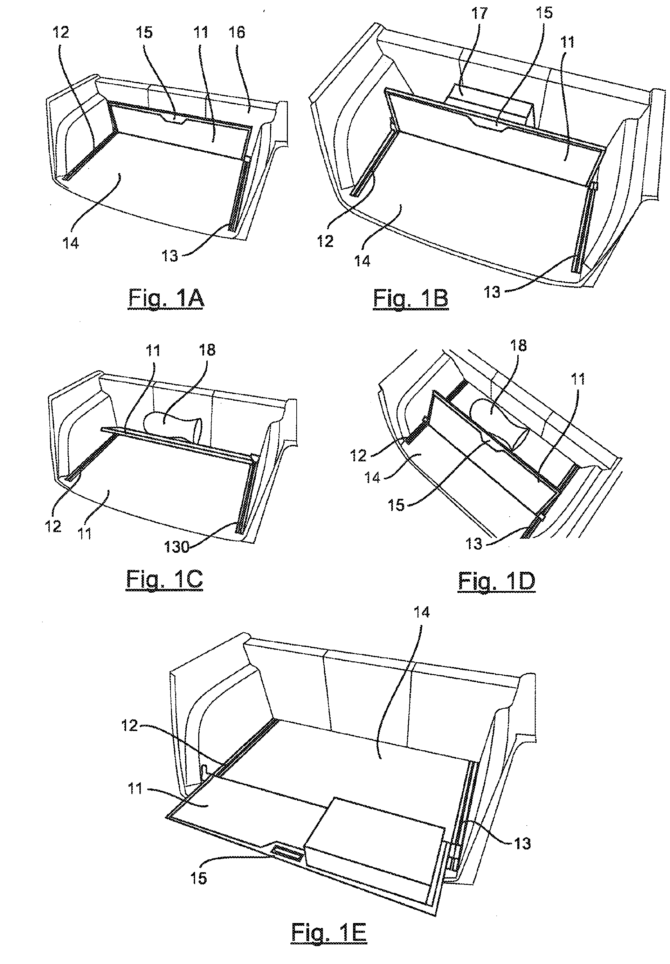

Ainsi, comme on le voit sur l'exemple des figures 1A à 1E, la plaque, ou tablette, 11 est montée sur deux rails 12 et 13, logés dans le plancher 14 du coffre.

Ces deux rails 12 et 13 sont placés le long des parois latérales du coffre, et la tablette 11 présente donc une largeur correspondant sensiblement à la distance des deux parois latérales, et plus précisément à l'écartement entre les deux rails. En variante, les rails 12 et 13 pourraient être montés en partie inférieure des parois latérales.

Une poignée 15 permet le contrôle du déplacement de la tablette 11, en inclinaison et en translation, ou coulissement.

Comme cela apparaît sur la figure 1A, lorsque le coffre est vide, ou lorsqu'il n'est pas nécessaire d'utiliser la tablette, celle-ci peut être ramenée le long des sièges arrière 16 du véhicule. Elle pourrait également reposer à plat sur le plancher du coffre.

En déplaçant la tablette 11, et en la maintenant verticale, on définit un logement pouvant recevoir et maintenir des objets, comme illustré par la figure 1B. Ici, la valise 17 est efficacement maintenue, entre la tablette 11 et l'arrière des sièges arrière du véhicule. Le déplacement en coulissement de la tablette 11 permet une adaptation aisée à l'épaisseur de l'objet 17 à transporter.

Selon le mode de réalisation particulier décrit en relation avec les figures 1A à 1E, la tablette 11 est également mobile en rotation, et peut donc être inclinée, pour définir des logements adaptés pour recevoir un (ou plusieurs) objet 18 de forme quelconque, comme illustré par les figures 1C et 1D.

Enfin, dans ce mode de réalisation, la tablette 11 peut être placée dans une position horizontale, de façon à ce qu'elle s'étende parallèlement au plancher 14, comme illustré par la figure 1E. Dans cette configuration, la tablette 11 peut être déplacée, par coulissement, le long des rails 12 et 13, de façon à s'étendre partiellement en dehors du véhicule, ce qui permet de faciliter le chargement, le déchargement et le déplacement dans le coffre d'objets lourds ou volumineux. La tablette 11 peut également être utilisée, dans cette position, comme de table d'appoint, par exemple pour un pique-nique.

Il est rappelé que ce principe de plateforme mobile est, en lui-même, connu (voir par exemple le document EP-1852308). Cependant, selon cette technique connue, la plateforme est uniquement mobile en translation, et reste systématiquement horizontale. Il s'agit spécifiquement d'un support d'objets, qu'il n'était nullement évident de transformer en un dispositif de maintien d'objets, s'étendant verticalement, ou dans une position intermédiaire.

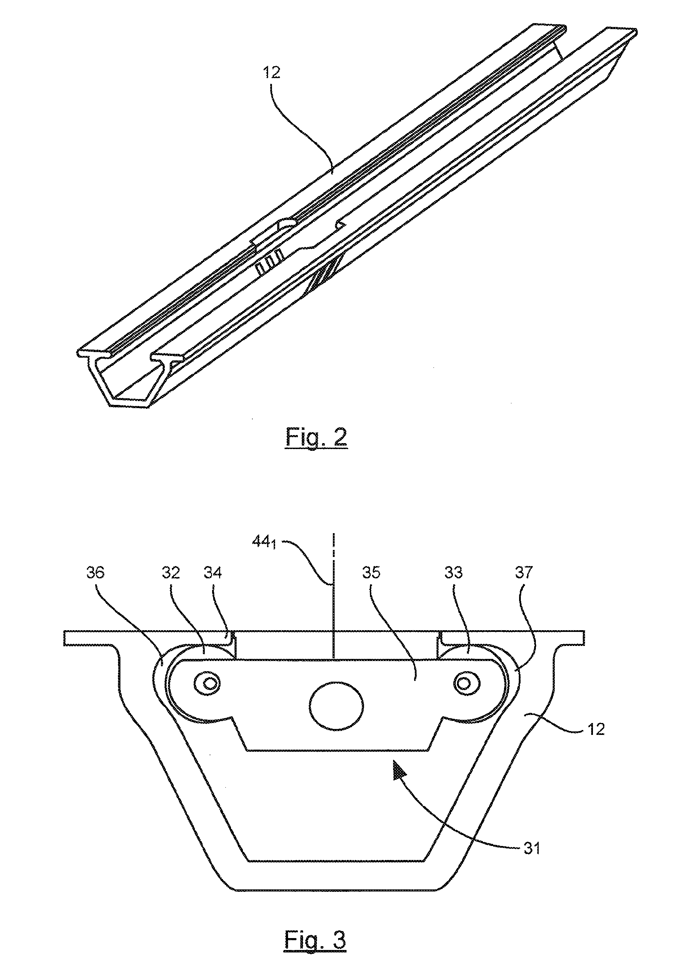

La figure 2 illustre, à titre d'exemple, un rail 12, 13 pouvant être utilisé pour le guidage de la tablette 11. Ce rail présente par exemple une largeur maximale de l'ordre de 4 à 5 cm, et une hauteur de l'ordre de 2 à 3 cm. Il peut notamment être réalisé en aluminium.

Le guidage en coulissement et le blocage, ou verrouillage, de la tablette 11, par rapport à ces rails peut notamment être assuré à l'aide d'un mécanisme à rouleaux, tel que décrit notamment dans le document de brevet EP-1097846.

Ainsi, comme illustré schématiquement par la figure 3, qui présente le rail de la figure 2, en coupe, et un chariot, ou patin, 31 de blocage à rouleaux, ce dernier porte deux rouleaux 32, 33, qui sont immobilisés par frottement contre la partie supérieure 34 du rail, par l'intermédiaire de la pièce 35, en l'absence de sollicitation.

Le déverrouillage est obtenu en tirant (vers le haut) sur la pièce 35, par exemple par l'intermédiaire d'un câble, ce qui déplace les rouleaux 32 et 33 dans les gorges correspondantes 36 et 37 du rail. Dans cette position, le chariot 31 peut être déplacé en coulissement le long du rail. En l'absence de sollicitation, et sous l'effet de moyens de rappel (non représentés), les rouleaux 32, 33 reprennent la position illustrée sur la figure 3, et le chariot est verrouillé, c'est-à-dire immobilisé en coulissement.

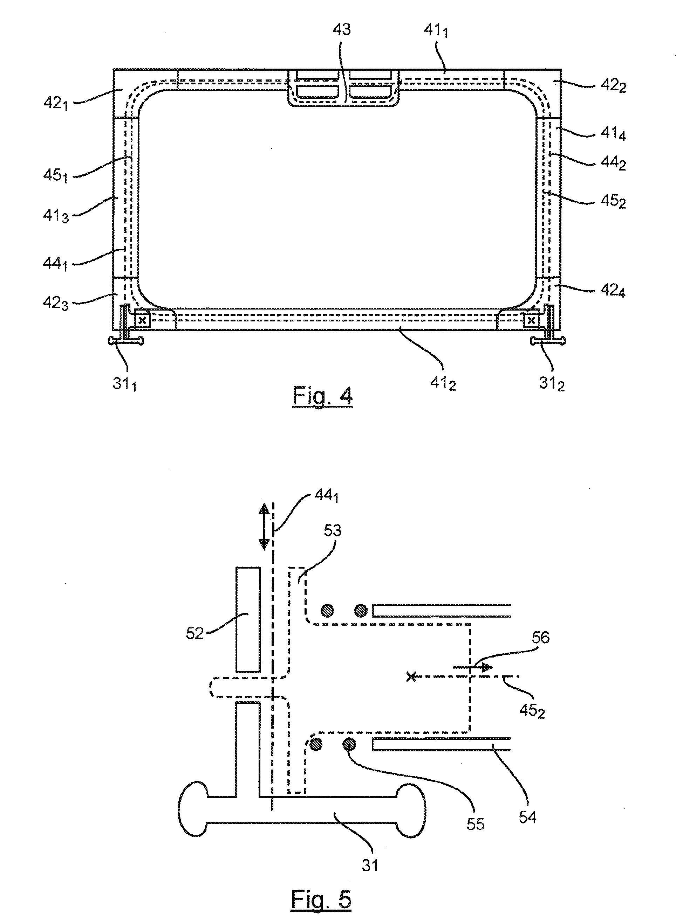

La figure 4 illustre schématiquement un exemple de tablette munie de moyens de verrouillage en inclinaison et en coulissement.

Cette tablette est constituée de quatre profilés en aluminium 41₁ à 41₄, solidarisés les uns aux autres par quatre coins en plastique injecté 42₁ à 42₄. Bien sûr, d'autres modes de réalisation peuvent être envisagés. La partie centrale de la tablette, maintenue par le cadre formé par les profilés et les coins, est réalisée dans un matériau adéquat, suffisamment solide et rigide pour supporter des objets relativement lourds.

Le cadre porte une poignée 43, dans sa partie supérieure (par opposition à la partie inférieure, proche de rails). Cette poignée est par exemple mobile sur un quart de tour, et s'étend, au repos, sensiblement parallèlement à la tablette. Pour déplacer celle-ci, l'utilisateur saisit donc la poignée 43, pour la ramener par exemple à angle droit avec la tablette. Cette opération entraîne une double action, sur un ensemble de câbles de déverrouillage.

Deux câbles 44₁, 44₂ permettent le contrôle du coulissement, c'est-à-dire le déverrouillage des chariots 31₁, 31₂ équipés de rouleaux, comme discuté précédemment.

Deux autres câbles 45₁, 45₂ permettent le contrôle de l'inclinaison, par exemple à l'aide d'un système à piston comme illustré par la figure 5.

Le chariot, ou patin, 31 circulant dans le rail présente une extension 52 s'étendant perpendiculairement au rail, et verticalement, et présentant un crantage. Cette extension 52 coopère avec un élément 53 correspondant s'étendant à partir de la partie inférieure 54 du cadre, et présentant également un crantage complémentaire. Cet élément 53 est mobile en translation par rapport au cadre, de façon à pouvoir prendre deux positions :
- une position de verrouillage, dans lequel elle est en contact avec l'extension 52 du patin, de façon que les crantages respectifs soient engrenés l'un dans l'autre, empêchant la rotation de la tablette ;
- une position de rotation, dans laquelle elle est éloignée de l'extension 52 du patin, et donc non engrenée avec celui-ci, la rotation de la tablette étant alors possible.

En d'autres termes, on a défini un piston de verrouillage de l'inclinaison. La position verrouillée, ou engrenée, est bien sûr la position par défaut, et un ressort 55 assure le retour dans cette position, en l'absence de sollicitation. Lorsque l'utilisateur agit sur la poignée 43, il déplace (flèche 56) le câble 45₂, et ce qui entraîne le déverrouillage (position illustrée par la figure 5).

D'autres moyens de verrouillage, par exemple à l'aide de pênes et de gâches distribués de façon adaptée, peuvent bien sûr être envisagés. De même, pour le déplacement et le verrouillage en coulissement, il est possible d'utiliser d'autres approches, tels que des systèmes à crémaillère (voir par exemple le document de brevet EP-1852303).

Par ailleurs, la tablette 11 peut bien sûr être équipée de différents équipements complémentaires, tels que des éléments de réception, par exemple de clippage, de moyens de sanglage ou de compartimentage.

Il est également possible de prévoir deux poignées distinctes, l'une permettant le déverrouillage en inclinaison, et l'autre le déverrouillage en coulissement.

Enfin, il est possible de motoriser le déplacement de la tablette, en coulissement et/ou en inclinaison.

## Revendications

1. Système d'organisation de l'espace et/ou de maintien d'au moins un objet dans un coffre de véhicule automobile, le systéme présentant un plancher (14) et un fond (16), et portant deux rails (12, 13) de coffre,
comprenant au moins une plaque (11) de retenue dont deux coins inférieurs sont solidaires de patins mobiles (31₁, 31₂) en coulissement dans lesdits rails (12, 13), chaque plaque (11) pouvant être déplacée le long desdits rails (12, 13) entre une position de rangement, dans laquelle elle est plaquée contre le fond (16) dudit coffre, et au moins une position de séparation et/ou de retenue, dans laquelle elle s'étend sensiblement parallèle audit fond (16),
ladite plaque (11) étant également mobile en rotation, de façon à pouvoir être inclinée par rapport à ladite position de repos,
**caractérisé en ce qu'**au moins un desdits patins (31₁, 31₂) portent des premiers éléments d'engrenage, complémentaires de seconds éléments d'engrenage solidaires de ladite plaque (11), lesdits premiers et seconds éléments d'engrenage pouvant prendre :
- une position engrenée, dans laquelle ladite plaque (11) est immobilisée en rotation ; et
- une position non engrenée, dans laquelle ladite plaque (11) peut être déplacée en rotation autour d'un axe s'étendant au voisinage dudit plancher (14).

2. Système selon la revendication 1, **caractérisé en ce qu'**il comprend des moyens de rappel (55), tendant à ramener lesdits éléments d'engrenage dans la position engrenée.

3. Système selon l'une quelconque des revendications 1 et 2, **caractérisé en ce que** ladite plaque (11) porte une première poignée de déverrouillage, agissant sur au moins un premier câble (44₁, 44₂) de commande de façon à déplacer lesdits seconds éléments d'engrenage pour qu'ils passent dans ladite position non engrenée.

4. Système selon l'une quelconque des revendications 1 à 3, **caractérisé en ce que** lesdits patins (31₁ et 31₂) portent deux rouleaux (32, 33) de verrouillage, assurant un blocage en coulissement par frottement contre le rail (12, 13) correspondant, dans une position de verrouillage.

5. Système selon la revendication 4, **caractérisé en ce que** ladite plaque (11) porte une seconde poignée de déverrouillage, agissant sur au moins un second câble (45₁ et 45₂) de commande de façon à déplacer pour lesdits rouleaux (32, 33) pour qu'ils passent dans une position déverrouillée, permettant un déplacement en coulissement.

6. Système selon les revendications 3 et 5, **caractérisé en ce qu'**il comprend une poignée unique (43), regroupant ladite première poignée et ladite seconde poignée.

7. Système selon l'une quelconque des revendications 1 à 6, **caractérisé en ce que** ladite plaque (11) peut prendre une position parallèle audit plancher (14), et être déplacée de façon à sortir au moins partiellement dudit coffre.

8. Véhicule automobile dont le coffre comprend un système d'organisation de l'espace et/ou de maintien d'au moins un objet (18) selon l'une quelconque des revendications 1 à 7.

## Claims

1. System for organisation of the space and/or retention of at least one object in a motor vehicle boot, the system having a floor (14) and a base (16), and bearing two boot rails (12, 13),
comprising at least one retention block (11), two lower corners of which are integral with runners (31₁, 31₂) which are mobile by being slid in the said rails (12, 13), each block (11) being able to be displaced along the said rails (12, 13) between a storage position, in which it is placed against the base (16) of the said boot, and at least one position of separation and/or retention, in which it extends substantially parallel to the said base (16),
the said block (11) also being mobile in rotation, such as to be able to be inclined relative to the said rest position,
**characterised in that** at least one of the said runners (31₁, 31₂) bears first engagement elements which are complementary to second engagement elements integral with the said block (11), the said first and second engagement elements being able to assume:
- an engaged position, in which the said block (11) is immobilised in rotation; and
- a non-engaged position, in which the said block (11) can be displaced in rotation around an axis which extends in the vicinity of the said floor (14).

2. System according to claim 1, **characterised in that** it comprises return means (55) which tend to return the said engagement elements to the engaged position.

3. System according to either of claims 1 and 2, **characterised in that** the said block (11) bears a first unlocking handle which acts on at least one first control cable (44₁, 44₂), such as to displace the said second engagement elements so that they move into the said non-engaged position.

4. System according to any one of claims 1 to 3, **characterised in that** the said runners (31₁, 31₂) bear two locking rollers (32, 33) which assure blocking of the sliding by means of friction against the corresponding rail (12, 13), in a locking position.

5. System according to claim 4, **characterised in that** the said block (11) bears a second unlocking handle which acts on at least one second control cable (45₁, 45₂), such as to displace the said rollers (32, 33) so that they move into an unlocked position, thus permitting displacement by sliding.

6. System according to claims 3 and 5, **characterised in that** it comprises a single handle (43) which combines the said first handle and the said second handle.

7. System according to any one of claims 1 to 6, **characterised in that** the said block (11) can assume a position parallel to the said floor (14), and can be displaced such as to extend at least partially from the said boot.

8. Motor vehicle, the boot of which comprises a system for organisation of the space and/or retention of at least one object (18), according to any one of claims 1 to 7.

## Patentansprüche

1. System zur Raumorganisation und/oder zum Halten mindestens eines Objekts im Kofferraum eines Kraftfahrzeugs, wobei das System einen Fußboden (14) und einen Boden (16) aufweist und zwei Kofferraumschienen (12, 13) trägt, das mindestens eine Rückhalteplatte (11) aufweist, von welcher zwei untere Ecken fest unter Gleiten mit beweglichen Kufen (31₁, 31₂) in den Schienen (12, 13) verbunden sind, wobei jede Platte (11) entlang der Schienen (12, 13) zwischen einer Verstauposition, in der sie gegen den Boden (16) des Kofferraums liegt, und mindestens einer Trenn- und/oder Rückhalteposition, in der sie sich im Wesentlichen zu dem Boden (16) parallel erstreckt, bewegt werden kann,
wobei die Platte (11) auch in Drehung derart beweglich ist, dass sie in Bezug zu der Ruheposition geneigt werden kann,
**dadurch gekennzeichnet, dass** mindestens eine der Kufen (31₁, 31₂) erste Eingriffselemente trägt, die mit zweiten Eingriffselementen, die fest mit der Platte (11) verbunden ist, komplementär sind, wobei die ersten und die zweiten Eingriffselemente:
- eine Eingriffsposition einnehmen können, in der die Platte (11) in Drehung stillgestellt ist, und
- eine nicht eingreifende Position einnehmen können, in der die Platte (11) in Drehung um eine Achse, die sich in der Nähe des Fußbodens (14) erstreckt, bewegt werden kann.

2. System nach Anspruch 1, **dadurch gekennzeichnet, dass** es Rückholmittel (55) aufweist, die dazu tendieren, die Eingriffselemente in die eingegriffene Position zurückzuholen.

3. System nach einem der Ansprüche 1 und 2, **dadurch gekennzeichnet, dass** die Platte (11) einen ersten Entriegelungsgriff trägt, der auf mindestens ein erstes Steuerkabel (44₁, 44₂) derart einwirkt, dass die zweiten Eingriffselemente bewegt werden, so dass sie in die nicht eingegriffene Position übergehen.

4. System nach einem der Ansprüche 1 bis 3, **dadurch gekennzeichnet, dass** die Kufen (31₁ und 31₂) zwei Verriegelungsrollen (32, 33) tragen, die ein Gleitblockieren durch Reibung zwischen der entsprechenden Schiene (12, 13) in einer Verriegelungsposition sicherstellen.

5. System nach Anspruch 4, **dadurch gekennzeichnet, dass** die Platte (11) einen zweiten Entriegelungsgriff trägt, der auf mindestens ein zweites Steuerkabel (45₁ und 45₂) derart einwirkt, dass die Rollen (32, 33) bewegt werden, so dass sie in eine entriegelte Position übergehen, die eine Gleitbewegung erlaubt.

6. System nach den Ansprüchen 3 und 5, **dadurch gekennzeichnet, dass** es einen einzigen Griff (43) aufweist, der den ersten und den zweiten Griff gruppiert.

7. System nach einem der Ansprüche 1 bis 6, **dadurch gekennzeichnet, dass** die Platte (11) eine zum Fußboden (14) parallele Position einnehmen kann und derart bewegt werden kann, dass sie mindestens teilweise aus dem Kofferraum austritt.

8. Kraftfahrzeug, dessen Kofferraum ein Raumorganisationssystem und/oder System zum Halten mindestens eines Objekts (18) nach einem der Ansprüche 1 bis 7 aufweist.
